# EUROPÄISCHE PATENTSCHRIFT

(11) **EP 1 171 722 B1**
(45) Veröffentlichungstag und Bekanntmachung des Hinweises auf die Patenterteilung: **23.02.2005**
(21) Anmeldenummer: 01909530.6
(22) Anmeldetag: 26.01.2001
(51) Int. Cl.: F16F 9/05

(54) **LUFTFEDERANORDNUNG**
PNEUMATIC SUSPENSION SYSTEM
SYSTEME DE SUSPENSION PNEUMATIQUE

(30) Priorität: 17.02.2000 DE 10007312
(43) Veröffentlichungstag der Anmeldung: 16.01.2002
(73) Patentinhaber: Vibracoustic GmbH & Co. KG, 69469 Weinheim (DE)
(72) Erfinder: BRANCO, Antonio, 21073 Hamburg (DE); WEBER, Michael, 21244 Buchholz (DE)
(74) Vertreter: Mattausch, Klaus
(86) Internationale Anmeldenummer: PCT/DE2001/000324
(87) Internationale Veröffentlichungsnummer: WO 2001/061206

(56) Entgegenhaltungen:
- EP-A- 0 391 075
- EP-A- 0 448 833
- DE-A- 1 530 135
- DE-A- 19 842 733
- US-A- 3 043 582
- US-A- 3 351 337
- US-A- 4 200 270
- US-A- 5 671 907
- PATENT ABSTRACTS OF JAPAN vol. 004, no. 116 (M-027), 19. August 1980 (1980-08-19) & JP 55 076237 A (TOYO TIRE & RUBBER CO LTD), 9. Juni 1980 (1980-06-09)

## Beschreibung

Die Erfindung betrifft eine Luftfederanordnung, bestehend mindestens aus folgenden Luftfederbauteilen, nämlich aus :
- einem Luftfederbalg aus elastomerem Werkstoff, der eine volumenvariable Luftkammer einschließt und insbesondere mit einem eingebetteten Festigkeitsträger versehen ist (Axialbalg, Kreuzlagenbalg);
- einem Luftfederdeckel, umfassend einen ersten Befestigungsbereich, an dem das eine Ende des Luftfederbalges mittels eines Klemmringes befestigt ist; sowie
- einem Luftfederkolben, umfassend einen zweiten Befestigungsbereich, an dem das andere Ende des Luftfederbalges ebenfalls mittels eines Klemmringes befestigt ist, sowie einen Abrollkolben, an dessen Außenwand der Luftfederbalg unter Bildung einer ersten Rollfalte abrollen kann.

Der Luftfederdeckel ist dabei außerhalb des ersten Befestigungsbereiches unter Vergrößerung seines Außendurchmessers mit einer konturierten Abrollfläche, umfassend einen Anfang und ein Ende, für eine zweite Rollfalte versehen.

Eine gattungsgemäße Luftfederanordnung gemäß Oberbegriff des Anspruchs 1 ist aus der Patentschrift US 3 043 582 bekannt.

In der EP-A-1 187 998, Stand der Technik nach Artikel 54(3) EPÜ, wird ebenfalls eine Luftfederanordnung mit Doppelrollfaltenkonstruktion vorgestellt.

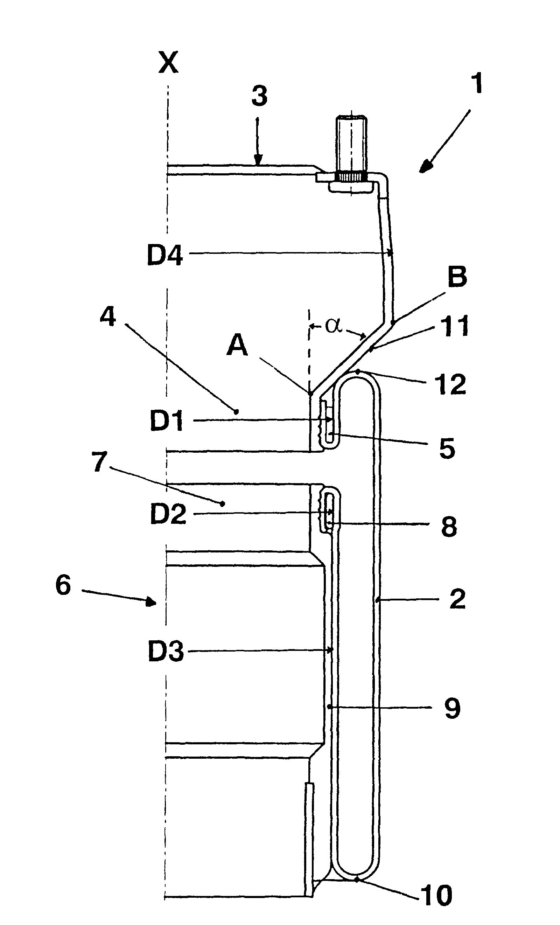

Hinsichtlich des Luftfederdeckels kommen folgende Varianten zum Einsatz:
- Der Luftfederdeckel ist ein im Wesentlichen plattenförmiges Bauteil (EP 0 391 075 A2, US 5 671 907).
- Der Luftfederdeckel ist ein zweiter Luftfederkolben (US 3 043 582, Fig. 9).
- Der Luftfederdeckel ist als Druckbehälter ausgebildet (DE 198 19 642 A1, Fig. 2).

Die beiden in Reihe geschalteten Rollfalten des Luftfederbalges führen zu einer Verbesserung der Komforteigenschaften. Nachteilig ist jedoch der rasche Verschleiß des Luftfederbalges.

Die Aufgabe der Erfindung besteht nun darin, die gattungsgemäße Luftfederanordnung so weiterzuentwickeln, dass eine Verbesserung der Komforteigenschaften bewirkt wird.

Gelöst wird diese Aufgabe gemäß Kennzeichen des Patentanspruches 1 dadurch, dass der Luftfederdeckel als Druckbehälter ausgebildet ist und die zweite Rollfalte stets an der Abrollfläche des Druckbehälters anliegt und gegenüber der ersten Rollfalte nur begrenzt abrollen kann, verbunden mit folgenden Zuordnungen:
- der Außendurchmesser des Abrollkolbens ist größer als der Außendurchmesser des ersten Befestigungsbereiches;
- der vergrößerte Außendurchmesser des Druckbehälters am Endpunkt der Abrollfläche ist größer als der Außendurchmesser des zweiten Befestigungsbereiches; sowie
- der vergrößerte Außendurchmesser des Druckbehälters am Endpunkt der Abrollfläche ist größer als der Außendurchmesser des Abrollkolbens.

Zweckmäßige Ausgestaltungen der erfindungsgemäßen Luftfederanordnung sind in den Patentansprüchen 2 bis 6 genannt.

Die Erfindung wird nun anhand eines Ausführungsbeispieles unter Bezugnahme auf eine schematische Zeichnung erläutert, wobei diesbezüglich folgende Bezugszeichenliste gilt:
- **1**: Luftfederanordnung
- **2**: Luftfederbalg
- **3**: Druckbehälter (Luftfederdeckel)
- **4**: erster Befestigungsbereich
- **5**: Klemmring
- **6**: Luftfederkolben
- **7**: zweiter Befestigungsbereich
- **8**: Klemmring
- **9**: Abrollkolben (Tauchkolben)
- **10**: erste Rollfalte (Luftfederschlaufe)
- **11**: konturierte Abrollfläche
- **12**: zweite Rollfalte (Luftfederschlaufe)
- **D1**: Außendurchmesser des ersten Befestigungsbereiches
- **D2**: Außendurchmesser des zweiten Befestigungsbereiches
- **D3**: Außendurchmesser des Abrollkolbens
- **D4**: Außendurchmesser des Druckbehälters
- **A**: Anfang der Abrollfläche
- **B**: Ende der Abrollfläche
- **X**: Achse der Luftfederanordnung
- **α**: Winkel der Abrollfläche

Die wesentlichen Bauteile der Luftfederanordnung **1** gemäß einziger Abbildung sind der Luftfederbalg **2**, der Druckbehälter **3** und der Luftfederkolben **6**. Dabei umfasst der Druckbehälter einen ersten Befestigungsbereich **4** mit einem Außendurchmesser **D1,** an dem das eine Ende des Luftfederbalges mittels eines Klemmringes **5** befestigt ist, wobei der Außendurchmesser **D1** den Klemmring mit einbezieht. Der Luftfederkolben umfasst einen zweiten Befestigungsbereich **7** mit einem Außendurchmesser **D2,** an dem das andere Ende des Luftfederbalges ebenfalls mittels eines Klemmringes **8** befestigt ist, wobei der Außendurchmesser **D2** auch hier den Klemmring mit einbezieht. Der Luftfederkolben weist ferner einen Abrollkolben **9** mit einem Außendurchmesser **D3** auf, an dessen Außenwand der Luftfederbalg unter Bildung einer ersten Rollfalte **10** abrollen kann.

Der Druckbehälter **3** ist ferner außerhalb des ersten Befestigungsbereiches **4**, und zwar insbesondere im direkten Anschluss an diesen Befestigungsbereich, unter Vergrößerung des Außendurchmessers **D4** mit einer konturierten Abrollfläche **11**, umfassend einen Anfang **A** und eine Ende **B,** für eine zweite Rollfalte **12** versehen. Die Rollfalte liegt dabei stets an der Abrollfläche an und kann gegenüber der ersten Rollfalte **10** nur begrenzt abrollen.

Zwischen den Punkten **A** und **B** der Abrollfläche **11** tritt also eine Vergrößerung des Außendurchmessers **D4** des Druckbehälters auf. In Bezug auf die Abrollfläche ist am Endpunkt **B** der Durchmesser **D4** am größten. Über diesen Endpunkt **B** hinaus verläuft der Druckbehälter **3** zumeist im wesentlichen zylindrisch weiter.

Die Abrollfläche **11** für die zweite Rollfalte **12** hat einen im wesentlichen konischen Verlauf. Außerdem gehen die Abrollfläche und der erste Befestigungsbereich **4** des Druckbehälters **3** einstückig ineinander über. Die Einstückigkeit bezieht sich dabei auf den unmittelbaren Befestigungsbereich **4** ohne Luftfederbalg **2** und Klemmring **5**.

Die Abrollfläche **11** für die zweite Rollfalte **12** verläuft in einem Winkel α von 15 bis 70°, insbesondere von 30 bis 50°, und zwar bezogen auf die Achse **X** der Luftfederanordnung **1**.

Hinsichtlich der Außendurchmesser **D1, D2, D3** und **D4** gelten folgende Zuordnungen:
D3>D1
D4 > D2
D4 > D3

Dabei gilt hinsichtlich des Außendurchmessers **D4** des Druckbehälters 3 der Endpunkt **B** der Abrollfläche **11** als Bezugspunkt.

## Patentansprüche

1. Luftfederanordnung (1), bestehend mindestens aus folgenden Luftfederbauteilen, nämlich aus:
- einem Luftfederbalg (2) aus elastomerem Werkstoff, der eine volumenvariable Luftkammer einschließt und insbesondere mit einem eingebetteten Festigkeitsträger versehen ist;
- einem Luftfederdeckel (3), umfassend einen ersten Befestigungsbereich (4) mit einem Außendurchmesser (D1), an dem das eine Ende des Luftfederbalges (2) mittels eines Klemmringes (5) befestigt ist, wobei der Außendurchmesser (D1) den Klemmring mit einbezieht; sowie
- einem Luftfederkolben (6), umfassend einen zweiten Befestigungsbereich (7) mit einem Außendurchmesser (D2), an dem das andere Ende des Luftfederbalges (2) ebenfalls mittels eines Klemmringes (8) befestigt ist, wobei der Außendurchmesser (D2) auch hier den Klemmring mit einbezieht, sowie einen Abrollkolben (9) mit einem Außendurchmesser (D3), an dessen Außenwand der Luftfederbalg unter Bildung einer ersten Rollfalte (10) abrollen kann; wobei
- der Luftfederdeckel (3) außerhalb des ersten Befestigungsbereiches (4) unter Vergrößerung seines Außendurchmessers (D4) mit einer konturierten Abrollfläche (11), umfassend einen Anfang (A) und ein Ende (B), für eine zweite Rollfalte (12) versehen ist;
**dadurch gekennzeichnet, dass** der Luftfederdeckel (3) als Druckbehälter ausgebildet ist und die zweite Rollfalte (12) stets an der Abrollfläche (11) des Druckbehälters anliegt und gegenüber der ersten Rollfalte (10) nur begrenzt abrollen kann, verbunden mit folgenden Zuordnungen:
- der Außendurchmesser (D3) des Abrollkolbens (9) ist größer als der Außendurchmesser (D1) des ersten Befestigungsbereiches (4);
- der vergrößerte Außendurchmesser (D4) des Druckbehälters (3) am Endpunkt (B) der Abrollfläche (11) ist größer als der Außendurchmesser (D2) des zweiten Befestigungsbereiches (7); sowie
- der vergrößerte Außendurchmesser (D4) des Druckbehälters (3) am Endpunkt (B) der Abrollfläche (11) ist größer als der Außendurchmesser (D3) des Abrollkolbens (9).

2. Luftfederanordnung nach Anspruch 1, **dadurch gekennzeichnet, dass** die Abrollfläche (11) für die zweite Rollfalte (12) einen im wesentlichen konischen Verlauf hat.

3. Luftfederanordnung nach Anspruch 1 oder 2, **dadurch gekennzeichnet, dass** sich die Abrollfläche (11) für die zweite Rollfalte (12) direkt an den ersten Befestigungsbereich (4) anschließt.

4. Luftfederanordnung nach einem der Ansprüche 1 bis 3, **dadurch gekennzeichnet, dass** die Abrollfläche (11) für die zweite Rollfalte (12) und der erste Befestigungsbereich (4) des Druckbehälters (3) einstückig ineinanderübergehen.

5. Luftfederanordnung nach einem der Ansprüche 1 bis 4, **dadurch gekennzeichnet, dass** die Abrollfläche (11) für die zweite Rollfalte (12) in einem Winkel α von 15 bis 70° verläuft, und zwar bezogen auf die Achse (X) der Luftfederanordnung (1).

6. Luftfederanordnung nach Anspruch 5, **dadurch gekennzeichnet, dass** die Abrollfläche (11) für die zweite Rollfalte (12) in einem Winkel α von 30 bis 50° verläuft.

## Claims

1. A pneumatic suspension system (1) comprising at least the following pneumatic suspension components, specifically:
- a pneumatic suspension bellows (2) made of elastomer material which encloses a pneumatic chamber built with variable volume, and is provided in particular with an embedded reinforcing element;
- a pneumatic suspension lid (3), comprising a first attachment region (4) with an external diameter (D1) to which one of the ends of the pneumatic suspension bellows (2) is attached by means of a clamping ring (5), the external diameter (D1) including the clamping ring; and
- a pneumatic suspension piston (6), comprising a second attachment region (7) with an external diameter (D2) to which the other end of the pneumatic suspension bellows (2) is also attached by means of a clamping ring (8), the external diameter (D2) also including the clamping ring here, as well as a rolling piston (9) with an external diameter (D3), on whose outer wall the pneumatic suspension bellows can roll forming a first rolling fold (10);
- the pneumatic suspension lid (3) being provided, outside the first attachment region (4), with a contoured rolling face (11) for a second rolling fold (12), with the effect of enlarging the external diameter (D4) of said attachment region (4), said rolling face (11) comprising a start (A) and an end (B), **characterized in that** the pneumatic suspension lid (3) is embodied as a pressure vessel and the second rolling fold (12) always bears against the rolling face (11) of the pressure vessel and can roll only to a limited degree with respect to the first rolling fold (10), combined with the following relationships:
- the external diameter (D3) of the rolling piston (9) is larger than the external diameter (D1) of the first attachment region (4);
- the enlarged external diameter (D4) of the pressure vessel (3) at the end point (B) of the rolling face (11) is larger than the external diameter (D2) of the second attachment region (7); and
- the enlarged external diameter (D4) of the pressure vessel (3) at the end point (B) of the rolling face (11) is larger than the external diameter (D3) of the rolling piston (9).

2. A pneumatic suspension system according to claim 1, **characterized in that** the rolling face (11) for the second rolling fold (12) has an essentially conical profile.

3. A pneumatic suspension system according to either of claims 1 and 2, **characterized in that** the rolling face (11) for the second rolling fold (12) directly adjoins the first attachment region (4).

4. A pneumatic suspension system according to any of claims 1 to 3, **characterized in that** the rolling face (11) for the second rolling fold (12) and the first attachment region (4) of the pressure vessel (3) are continuous with one another.

5. A pneumatic suspension system according to any of claims 1 to 4, **characterized in that** the rolling face (11) for the second rolling fold (12) extends at an angle α of 15 to 70°, specifically with respect to the axis (X) of the pneumatic suspension system (1).

6. A pneumatic suspension system according to claim 5, **characterized in that** the rolling face (11) for the second rolling fold (12) extends at an angle α of 30 to 50°.

## Revendications

1. Ensemble de suspension pneumatique (1), constitué par au moins les éléments de suspension pneumatique suivants, à savoir :
- un soufflet de suspension pneumatique (2) en matière élastomère, qui enferme une chambre d'air de volume variable et qui est notamment pourvu d'un support de résistance incorporé ;
- un couvercle de suspension pneumatique (3), comprenant une première région de fixation (4) de diamètre extérieur (D1) sur laquelle l'une des extrémités du soufflet de suspension pneumatique (2) est fixée au moyen d'une bague de serrage (5), le diamètre extérieur (D1) incluant la bague de serrage ;
- et un piston de suspension pneumatique (6), comprenant une deuxième région de fixation (7) de diamètre extérieur (D2) sur laquelle l'autre extrémité du soufflet de suspension pneumatique (2) est fixée également au moyen d'une bague de serrage (8), le diamètre extérieur (D2) incluant ici aussi la bague de serrage, et comprenant également un piston de déroulement (9) de diamètre extérieur (D3), sur la paroi extérieure duquel le soufflet de suspension pneumatique peut se dérouler en formant un premier pli enroulé (10) ;
- le couvercle de suspension pneumatique (3) étant pourvu en dehors de la première région de fixation (4), en agrandissant son diamètre extérieur (D4), d'une surface de déroulement profilée (11), comprenant un début (A) et une fin (B), pour un deuxième pli enroulé (12) ;
**caractérisé en ce que** le couvercle de suspension pneumatique (3) est réalisé sous la forme d'un réservoir sous pression et le deuxième pli enroulé (12) s'applique constamment contre la surface de déroulement (11) du réservoir sous pression et ne peut se dérouler que d'une manière limitée par rapport au premier pli enroulé (10), avec les relations suivantes :
- le diamètre extérieur (D3) du piston de déroulement (9) est supérieur au diamètre extérieur (D1) de la première région de fixation (4) ;
- le diamètre extérieur agrandi (D4) du réservoir sous pression (3) au point final (B) de la surface de déroulement (11) est supérieur au diamètre extérieur (D2) de la deuxième région de fixation (7) ;
- et le diamètre extérieur agrandi (D4) du réservoir sous pression (3) au point final (B) de la surface de déroulement (11) est supérieur au diamètre extérieur (D3) du piston de déroulement (9).

2. Ensemble de suspension pneumatique selon la revendication 1, **caractérisé en ce que** la surface de déroulement (11) pour le deuxième pli enroulé (12) possède une allure essentiellement conique.

3. Ensemble de suspension pneumatique selon la revendication 1 ou 2, **caractérisé en ce que** la surface de déroulement (11) pour le deuxième pli enroulé (12) se raccorde directement à la première région de fixation (4).

4. Ensemble de suspension pneumatique selon l'une des revendications 1 à 3, **caractérisé en ce que** la surface de déroulement (11) pour le deuxième pli enroulé (12) et la première région de fixation (4) du réservoir sous pression (3) se raccordent d'un seul tenant l'une à l'autre.

5. Ensemble de suspension pneumatique selon l'une des revendications 1 à 4, **caractérisé en ce que** la surface de déroulement (11) pour le deuxième pli enroulé (12) s'étend sous un angle α de 15 à 70°, et ce par rapport à l'axe (X) de l'ensemble de suspension pneumatique (1).

6. Ensemble de suspension pneumatique selon la revendication 5, **caractérisé en ce que** la surface de déroulement (11) pour le deuxième pli enroulé (12) s'étend sous un angle α de 30 à 50°.
